(19) **Europäisches Patentamt / European Patent Office / Office européen des brevets**

(11) **EP 2 198 141 B1**

(12) **EUROPEAN PATENT SPECIFICATION**

(45) Date of publication and mention
of the grant of the patent:
**18.01.2012 Bulletin 2012/03**

(21) Application number: **08832137.7**

(22) Date of filing: **16.09.2008**

(51) Int Cl.:
*F02D 41/00* (2006.01)    *F02M 25/07* (2006.01)
*F02D 41/14* (2006.01)

(86) International application number:
**PCT/IB2008/002405**

(87) International publication number:
**WO 2009/037543 (26.03.2009 Gazette 2009/13)**

(54) **EXHAUST-GAS RECIRCULATION APPARATUS AND EXHAUST-GAS RECIRCULATION FLOW RATE ESTIMATION METHOD FOR INTERNAL COMBUSTION ENGINES**

ABGASRÜCKFÜHRUNGSVORRICHTUNG UND VERFAHREN ZUR KALKULATION DER ABGASRÜCKFÜHRUNGSFLUSSRATE FÜR EINEN VERBRENNUNGSMOTOR

APPAREIL DE RECIRCULATION DE GAZ D'ÉCHAPPEMENT ET PROCÉDÉ D'ESTIMATION DE DÉBIT DE RECIRCULATION DE GAZ D'ÉCHAPPEMENT POUR MOTEURS À COMBUSTION INTERNE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **21.09.2007 JP 2007245045**

(43) Date of publication of application:
**23.06.2010 Bulletin 2010/25**

(73) Proprietor: **Toyota Jidosha Kabushiki Kaisha Toyota-shi, Aichi-ken 471-8571 (JP)**

(72) Inventors:
• **MATSUNAGA, Akio**
**Toyota-shi**
**Aichi-ken 471-8571 (JP)**

• **NAKAYAMA, Shigeki**
**Toyota-shi**
**Aichi-ken 471-8571 (JP)**
• **ONISHI, Tomomi**
**Toyota-shi**
**Aichi-ken 471-8571 (JP)**
• **IEMURA, Akiyuki**
**Toyota-shi**
**Aichi-ken 471-8571 (JP)**

(74) Representative: **Intès, Didier Gérard André et al Cabinet Beau de Loménie**
**158, rue de l'Université**
**75340 Paris Cedex 07 (FR)**

(56) References cited:
**EP-A- 1 607 606**       **WO-A-2007/076038**
**WO-A-2007/085944**     **DE-A1-102005 013 977**
**DE-A1-102006 038 863**

**Description**

BACKGROUND OF THE INVENTION

1. Field of the Invention

The invention relates to an exhaust-gas recirculation apparatus and an exhaust-gas recirculation flow rate estimation method for an internal combustion engine having two or more EGR passages extending between the exhaust passage and the intake passage of the internal combustion engine.

2. Description of the Related Art

Japanese Patent Application Publication No. 2005-076456 (JP-A-2005-076456) discloses an internal combustion engine having: a first EGR passage extending from a portion of an exhaust pipe in which a catalyst converter incorporating a filter carrying exhaust-purification catalyst to a portion of an air intake pipe upstream of a compressor of a turbocharger; a second EGR passage extending from a portion of an exhaust manifold upstream of a turbine of the turbocharger to a surge tank connected to the intake ports of the internal combustion engine; a first EGR control valve provided in the first EGR passage; and a second EGR control valve provided in the second EGR passage. Further, Japanese Patent Application Publication 10-141147 (JP-A-10-141147) discloses an internal combustion engine in which oxygen concentration sensors are provided in the intake passage and the exhaust passage of the internal combustion engine, respectively, and the actual flow rate of EGR gas is determined from the values detected by the oxygen concentration sensors. Further, Japanese Patent Publication No. 06-21550 (JP-06-21550B) describes a technology related to the invention.

In an internal combustion engine in which two or more EGR passages are provided and EGR valves for controlling the flow rate of exhaust gas to be recirculated to the intake passage (will be referred to as "EGR gas" where necessary) are provided in the respective EGR passages, such as the one described in JP-A-2005-076456, typically, at least one of the EGR valves is controlled by open-loop control. In the open-loop control, the opening degree of the EGR valve is controlled in accordance with the control manner set in advance despite the fact that the flow rate of EGR gas in the EGR passage in which said EGR valve is provided changes depending upon the pressure loss at the EGR passage and the individual variability of the EGR valve even if the opening degree of the EGR valve remains unchanged. In this case, for example, the EGR-gas flow rates at the respective EGR passages are obtained, and the control manner of the open-loop control is corrected based on the obtained EGR-gas flow rate in order to improve the control accuracy of the EGR valves. The EGR-gas flow rate can be determined based on the value detected by an oxygen concentration sensor as in the internal combustion engine of JP-A-10-141147. However, the method described in JP-A-10-141147 is applicable only to internal combustion engines having only one EGR passage, not to internal combustion engines having two or more EGR passages.

SUMMARY OF THE INVENTION

The invention provides an exhaust-gas recirculation apparatus and an exhaust-gas recirculation flow rate estimation method for an internal combustion engine having two or more EGR passages, which enable estimating the flow rate of exhaust gas recirculated to the intake passage via each EGR passage.

The first aspect of the invention relates to an exhaust-gas recirculation apparatus for an internal combustion engine, including: exhaust-gas purifying means provided in an exhaust passage of the internal combustion engine; a first EGR passage extending from a portion of the exhaust passage upstream of the exhaust-gas purifying means to an intake passage of the internal combustion engine; a second EGR passage extending from a portion of the exhaust passage downstream of the exhaust-gas purifying means to a portion of the intake passage upstream of a portion to which exhaust gas is delivered from the first EGR passage; a first EGR valve that adjusts the flow rate of exhaust gas flowing in the first EGR passage; a second EGR valve that adjusts the flow rate of exhaust gas flowing in the second EGR passage; and controlling means for controlling at least one of the first EGR valve and the second EGR valve by open-loop control. The exhaust-gas recirculation apparatus further has: fresh-air amount detecting means for detecting the flow rate of air drawn into the intake passage of the internal combustion engine from the outside; oxygen concentration detecting means for detecting the oxygen concentration in gas at a portion of the intake passage downstream of the portion to which exhaust gas is delivered from the first EGR passage; and flow-rate obtaining means for obtaining the flow rate of gas passing through the exhaust-gas purifying means. The controlling means has estimating means for estimating the flow rate of gas flowing in the first EGR passage and the flow rate of gas flowing in the second EGR passage based on the air flow rate detected by the fresh-air amount detecting means, the oxygen concentration detected by the oxygen concentration detecting means, the gas flow rate detected by the flow-rate obtaining means, and the amount of fuel supplied to cylinders of the internal combustion engine per unit time.

According to the exhaust-gas recirculation apparatus of the first aspect of the invention, because the oxygen concentration detecting means is provided downstream of the portion of the intake passage to which exhaust gas is delivered from the second EGR passage and downstream of the portion of the intake passage to which exhaust gas is delivered from the first EGR passage, the oxygen concentration detecting means can detect the oxygen concentration in the mixture gas containing the air drawn from the outside (will be referred to as "fresh air" where necessary), the EGR gas recirculated to the intake passage via the first EGR passage (will be referred to as "first EGR gas"), and the EGR gas recirculated to the intake passage via the second EGR passage (will be referred to as "second EGR gas"). Because the oxygen concentration in this mixture gas is correlative to the flow rate of the EGR gas recirculated to the intake passage, that is, the ratio between the sum of the flow rate of the first EGR gas and the flow rate of the second EGR gas and the flow rate of fresh air, said ratio can be estimated based on the oxygen concentration detected by the oxygen concentration detecting means. Therefore, the flow rate of gas drawn into the cylinders of the internal combustion engine (will be referred to as "intake gas" where necessary), that is, the sum of the flow rate of fresh air, the flow rate of the first EGR gas, and the flow rate of the second EGR gas can be estimated based on the estimated ratio and the flow rate of fresh air. Further, because the exhaust-gas purifying means is provided downstream of the portion of the exhaust passage to which the first EGR passage is connected and upstream of the portion of the exhaust passage to which the second EGR passage is connected, the amount of gas passing through the exhaust-gas purifying means equals the value obtained by subtracting the amount of the first EGR gas from the amount of gas discharged from the cylinders of the internal combustion engine. The gas discharged from the cylinders consists of the fuel supplied to the cylinders and the intake gas (fresh air, first EGR gas, and second EGR gas). In general, the amount of fuel supplied to the cylinders of an internal combustion is set in control, therefore said amount can be obtained from the set value. As mentioned above, the gas passing through the exhaust-gas purifying means (will be referred to as "passing gas" where necessary) does not contain the first EGR gas, therefore the flow rate of the second EGR gas can be determined based on the amount of the passing gas, the amount of fuel supplied to the cylinders of the internal combustion engine, and the flow rate of fresh air. The flow rate of the first EGR gas can be obtained by subtracting the flow rate of the EGR gas and the flow rate of fresh air from the flow rate of the intake gas. According to the exhaust-gas recirculation apparatus of the first aspect of the invention, as such, the flow rate of the first EGR gas and the flow rate of the second EGR gas can be estimated based on the flow rate of fresh air, the oxygen concentration detected by the oxygen concentration detecting means, the gas flow rate (the passing gas flow rate) obtained by the flow-rate obtaining means, and the amount of fuel supplied to the cylinders of the internal combustion engine.

In order to estimate the flow rate of the first EGR gas and the flow rate of the second EGR gas as described above, the exhaust-gas recirculation apparatus of the first aspect of the invention may be such that: the estimating means first estimates the flow rate of intake gas drawn into the cylinders of the internal combustion engine based on the air flow rate detected by the fresh-air amount detecting means, the oxygen concentration detected by the oxygen concentration detecting means, and the amount of fuel supplied to the cylinders of the internal combustion engine; then the estimating means estimates the flow rate of gas flowing in the second EGR passage based on the estimated intake gas flow rate, the gas flow rate obtained by the flow-rate obtaining means, the air flow rate detected by the fresh-air amount detecting means, and the amount of fuel supplied to the cylinders of the internal combustion engine; and then the estimating means estimates the flow rate of gas flowing in the first EGR passage based on the estimated flow rate of gas flowing in the second EGR passage, the flow rate of intake gas, and the air flow rate detected by the fresh-air amount detecting means.

Further, the exhaust-gas recirculation apparatus of the first aspect of the invention may further have pressure-difference detecting means for detecting the difference between the pressure at an inlet of the exhaust-gas purifying means and the pressure at an outlet of the exhaust-gas purifying means and the flow-rate obtaining means may estimate the flow rate of gas passing through the exhaust-gas purifying means based on the pressure difference detected by the pressure-difference detecting means. The amount of gas passing through the exhaust-gas purifying means varies depending upon the difference between the pressure at the inlet and the pressure at the outlet of the exhaust-gas purifying means. Therefore, the flow rate of the passing gas can be estimated based on said pressure difference. Further, in a case where a filter for trapping particulate matter (PM), such as soot contained, in exhaust gas is used as the exhaust-gas purifying means, pressure-difference means for detecting the pressure difference across the filter is often provided. In this case, the flow rate of gas flowing through the exhaust-gas purifying means can be obtained without providing any additional components.

According to the exhaust-gas recirculation apparatus of the first aspect of the invention, the oxygen concentration detecting means is provided at the portion of the intake passage that is downstream of the portion to which exhaust gas is delivered from the second EGR passage and the portion to which exhaust gas is delivered from the first EGR passage, and the flow-rate obtaining means for obtaining the flow rate of gas passing through the exhaust-gas purifying means is provided at the portion of the exhaust passage that is downstream of the portion to which the first EGR gas is connected and upstream of the portion to which the second EGR passage is connected. Thus, the flow rates of EGR gases recirculated to the intake passage via the respective EGR passages can be estimated based on the oxygen concentration detected by the oxygen concentration detecting means, the passing-gas flow rate obtained by the flow-rate obtaining means, the flow rate of fresh air, and the amount fuel supplied to the cylinders of the internal combustion engine.

The second aspect of the invention relates to an exhaust-gas recirculation flow rate estimation method for an exhaust-gas recirculation apparatus for an internal combustion engine, the exhaust-gas recirculation apparatus including: exhaust-gas purifying means provided in an exhaust passage of the internal combustion engine; a first EGR passage extending from a portion of the exhaust passage upstream of the exhaust-gas purifying means to an intake passage of the internal combustion engine; a second EGR passage extending from a portion of the exhaust passage downstream of the exhaust-gas purifying means to a portion of the intake passage upstream of a portion to which exhaust gas is delivered from the first EGR passage; a first EGR valve that adjusts the flow rate of exhaust gas flowing in the first EGR passage; a second EGR valve that adjusts the flow rate of exhaust gas flowing in the second EGR passage; and controlling means for controlling at least one of the first EGR valve and the second EGR valve by open-loop control. The exhaust-gas recirculation flow rate estimation includes: detecting the flow rate of air drawn into the intake passage of the internal combustion engine from the outside; detecting the oxygen concentration in gas at a portion of the intake passage downstream of the portion to which exhaust gas is delivered from the first EGR passage; obtaining the flow rate of gas passing through the exhaust-gas purifying means; and estimating the flow rate of gas flowing in the first EGR passage and the flow rate of gas flowing in the second EGR passage based on the detected flow rate of air drawn into the intake passage of the internal combustion engine from the outside, the detected oxygen concentration in the gas at the portion of the intake passage downstream of the portion to which exhaust gas is delivered from the first EGR passage, the flow rate of gas passing through the exhaust-gas purifying means, and the amount of fuel supplied to cylinders of the internal combustion engine per unit time.

BRIEF DESCRIPTION OF THE DRAWINGS

The foregoing and further objects, features and advantages of the invention will become apparent from the following description of example embodiments with reference to the accompanying drawings, wherein like numerals are used to represent like elements and wherein:

FIG 1 is a view showing an internal combustion engine incorporating an exhaust-gas recirculation apparatus according to an example embodiment of the invention;
FIG. 2 is a flowchart illustrating a relation learning routine executed by an ECU; and
FIG 3 is a view illustrating gas flows at each portion of the internal combustion engine.

DETAILED DESCRIPTION OF THE EMBODIMENTS

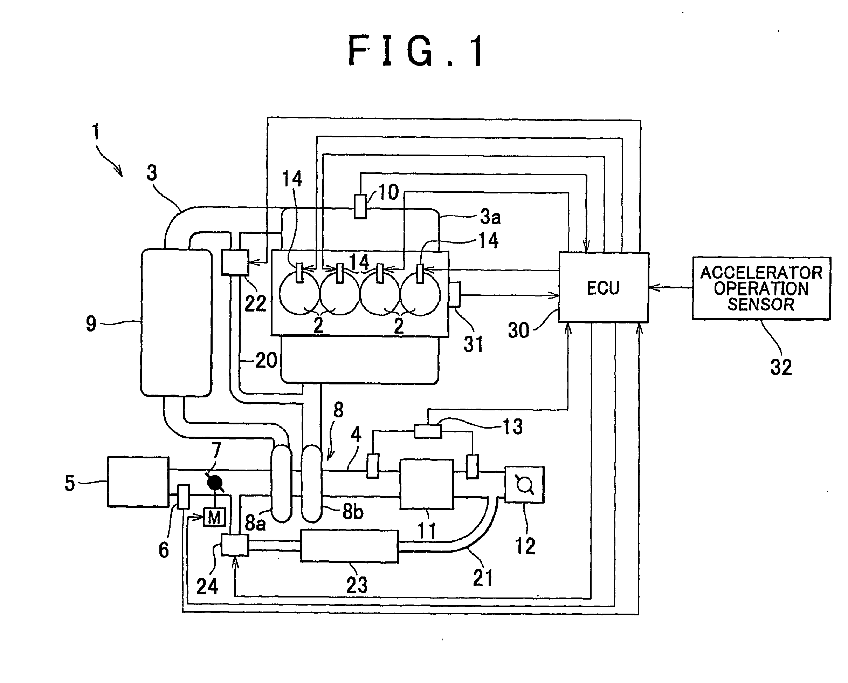

FIG 1 shows an internal combustion engine incorporating an exhaust-gas recirculation apparatus according to an example embodiment of the invention. The internal combustion engine 1 shown in FIG 1 is a diesel engine mounted in a vehicle as a drive power source. The internal combustion engine 1 has a plurality of cylinders 2 (four cylinders 2 in FIG 1) and an intake passage 3 and an exhaust passage 4 connected to the respective cylinders 2. In the intake passage 3 are provided an air filter 5 for filtering intake air, an airflow meter 6 ("fresh-air amount detecting means") that outputs signals indicative of the amount of intake air, a throttle valve 7 for adjusting the amount of intake air, a compressor 8a of a turbocharger 8, and an inter-cooler 9 for cooling intake air. Further, in an intake manifold 3a forming a portion of the intake passage 3, an oxygen concentration sensor 10 ("oxygen concentration detecting means") that outputs signals indicative of the oxygen concentration in the gas in the intake manifold 3a is provided. On the other hand, in the exhaust passage 4 are provided a turbine 8b of the turbocharger 8, an exhaust-gas purification catalyst unit 11 ("exhaust-gas purifying means") for purifying exhaust gas, and an exhaust-gas throttle valve 12 for adjusting the flow rate of exhaust gas. The exhaust-gas purification catalyst unit 11 is constituted of, for example, a particulate-matter (PM) trapping filter carrying storage-reduction type NOx catalysts. Referring to FIG 1, a pressure difference sensor 13 ("pressure-difference detecting means") that outputs signals indicative of the difference between the pressure at the inlet of the exhaust-gas purification catalyst unit 11 and the pressure at the outlet of the exhaust-gas purification catalyst unit 11 is provided in the exhaust passage 4. In the respective cylinders 2, a fuel injection valve 14 is provided to supply fuel to said cylinder 2.

The exhaust passage 4 and the intake passage 3 communicate each other via a high-pressure EGR passage 20 and a low-pressure EGR passage 21. Referring to FIG 1, the high-pressure EGR passage 20 extends from a portion of the exhaust passage 4 upstream of the turbine 8b, that is, upstream of the exhaust-gas purification catalyst unit 11 to a portion of the intake passage 3 downstream of the compressor 8a, and the low-pressure EGR passage 21 extends from a portion of the exhaust passage 4 downstream of the exhaust-gas purification catalyst unit 11 to a portion of the intake passage 3 upstream of the compressor 8a, that is, upstream of the portion to which exhaust gas is delivered from the high-pressure EGR passage 20 (will be referred to as "exhaust-gas outlet" where necessary). Thus, the high-pressure EGR passage 20 corresponds to "first EGR passage" in the embodiment, and the low-pressure EGR passage 21 corresponds to +"second EGR passage" in the embodiment. As shown in FIG 1, the exhaust-gas outlets of the high-pressure EGR passage 20 and the low-pressure EGR passage 21 are located upstream of the intake manifold 3a in the intake passage 3. A high-pressure EGR valve 22 ("first EGR valve") for adjusting the flow rate of EGR gas flowing in the high-pressure EGR passage 20 (will hereinafter be referred to as "first EGR gas) is provided in the high-pressure EGR passage 20. On the other hand, an EGR cooler 23 for cooling EGR gas delivered to the intake passage 3 and a low-pressure EGR valve 24 ("second EGR valve") for adjusting the flow rate of the EGR gas flowing in the low-pressure EGR passage 21 (will hereinafter be referred to as "second EGR gas") are provided in the low-pressure EGR passage 21.

The high-pressure EGR valve 22 and the low-pressure EGR valve 24 are controlled by an Electronic Control Unit (ECU) 30. The ECU 30 is a computer unit constituted of a microprocessor and various peripheral components used for processing by the microprocessor, such as a RAM (Random Access Memory), a ROM (Read-Only-Memory), and so on. The ECU 30 controls the operation of the internal combustion engine 1 based on the signals output from various sensors provided in the internal combustion engine 1. For example, the ECU 30 calculates the amount of fuel needed to be supplied to the respective cylinders 2 based on the engine speed and the engine load and then controls the respective fuel injection valves 14 to inject the calculated amount of fuel. Further, when delivering EGR gas into the intake passage 3, the ECU 30 determines, based on the engine speed and the engine load, whether to deliver EGR gas through the high-pressure EGR passage 20 or through the low-pressure EGR passage 21, and controls, based on the result of said determination, the opening degree of the high-pressure EGR valve 22 and the opening degree of the low-pressure EGR valve 24 such that a target amount of EGR gas is delivered to the intake passage 3. The sensors used for such control include a crank angle sensor 31 that outputs signals indicative of the crank angle, an accelerator operation sensor 32 that outputs signals indicative of the accelerator operation amount, and so on, which are all connected to the ECU 30. Further, the air-flow sensor 6, the oxygen concentration sensor 10, and the pressure-difference sensor 13 are also connected to the ECU 30. Note that there are various other sensors connected to the ECU 30 but they are not shown in the drawings.

When controlling the high-pressure EGR valve 22 and the low-pressure EGR valve 24 as described above, the ECU 30 uses different control methods for the high-pressure EGR valve 22 and the low-pressure EGR valve 24. That is, the ECU 30 performs feedback control to the high-pressure EGR valve 22 such that the oxygen concentration in the intake air drawn into the cylinders 2 equals a target value that is set in accordance with the operation state of the internal combustion engine 1. On the other hand, with regard to the control of the low-pressure EGR valve 24, the ECU 30 calculates a target flow rate based on the engine speed and the engine load, and then the ECU 30 controls the opening degree of the low-pressure EGR valve 24 such that the second EGR gas is delivered at the target flow rate into the intake passage 3 via the low-pressure EGR passage 21. That is, the ECU 30 performs open-loop control to the low-pressure EGR valve 24. For such open-loop control, for example, a map defining the relation between the opening degree of the low-pressure EGR valve 24 and the flow rate of the second EGR gas is prepared in advance and stored in the RAM of the ECU 30, and the opening degree of the low-pressure EGR valve 24 is controlled in accordance with this map. Adapted to control the high-pressure EGR valve 22 and the low-pressure EGR valve 24 as described above, the ECU 30 serves as "controlling means" in the embodiment.

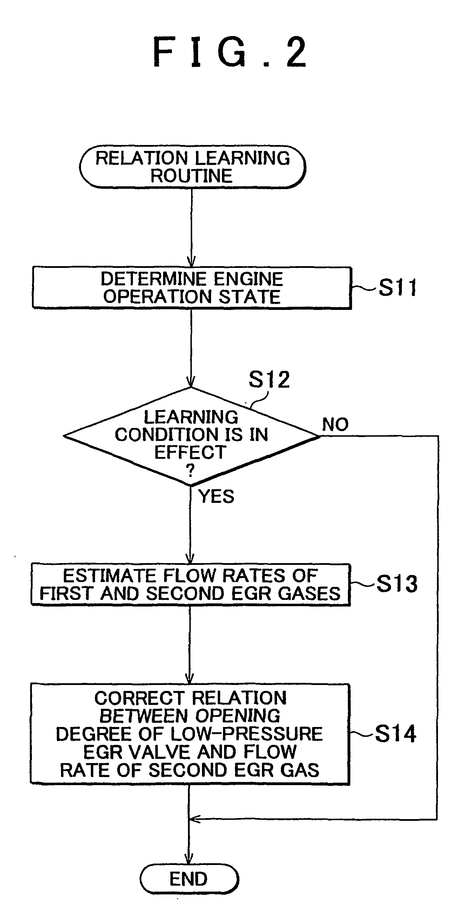

The relation between the opening degree of the low-pressure EGR valve 24 and the flow rate of the second EGR gas varies depending upon, for example, how long the internal combustion engine 1 has been running. For example, the relation between the opening degree of the low-pressure EGR valve 24 and the flow rate of the second EGR gas varies due to a change in the pressure loss caused by particulate matter attaching to the inner wall of the low-pressure EGR passage 21 or to the valve body of the low-pressure EGR valve 24. Thus, the ECU 30, at given time intervals, estimates the flow rates of the first EGR gas and the second EGR gas and correct the relation between the opening degree of the low-pressure EGR valve 24 and the flow rate of the second EGR gas based on the opening degree of the low-pressure EGR valve 24 at the time of estimation and the estimated flow rate of the second EGR gas. The flowchart of FIG 2 illustrates a relation learning routine that the ECU 30 repeatedly executes at given time intervals to correct the relation between the opening degree of the low-pressure EGR valve 24 and the flow rate of the second EGR gas.

Referring to FIG 2, after the start of this routine, the ECU 30 first determines the operation state of the internal combustion engine 1 in step S11. In this step, the ECU 30 obtains the engine speed, the engine load, the accelerator operation amount, and so on, to determine the operation state of the internal combustion engine 1. Then, in step S12, the ECU 30 determines wether a predetermined learning condition is presently in effect. When the operation state of the internal combustion engine 1 is varying, it indicates that the flow rates of the first EGR gas and the second EGR gas are also varying. In such a case, the accuracy in estimating the flow rate of each EGR gas is relatively low. In view of this, the learning condition is regarded as being in effect, for example, when the internal combustion engine 1 is running in a stable state and the high-pressure EGR valve 22 and the low-pressure EGR valve 24 are both open. If this condition is not in effect, the ECU 30 finishes the present cycle of the routine.

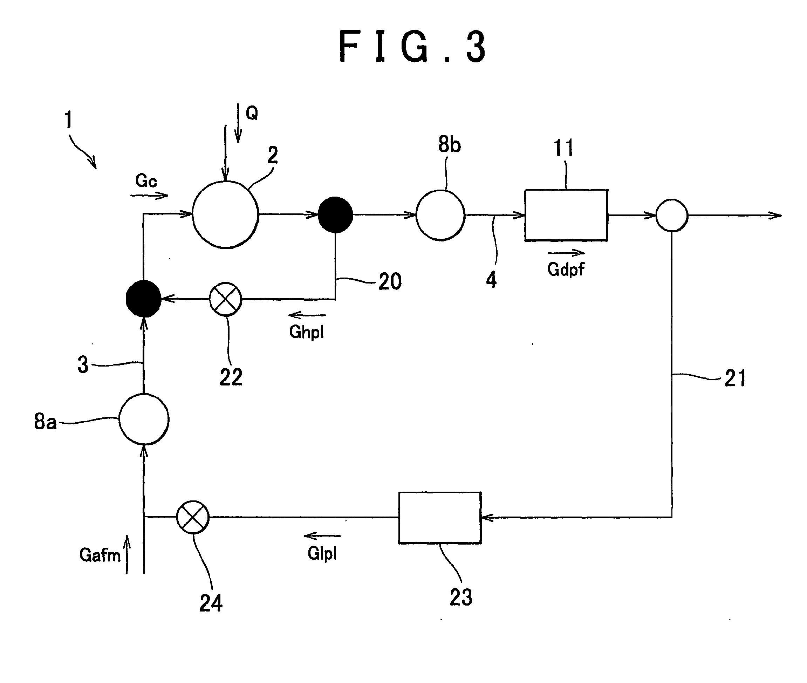

On the other hand, if it is determined that the learning condition is presently in effect, the ECU 30 then proceeds to step S 13 and estimates the flow rates of the first EGR gas and the second EGR gas. In the following, the method of this estimation will be described with reference to FIG 3. FIG 3 illustrates the flow of gas at each portion of the internal combustion engine 1 shown in FIG 1. In FIG 3, the compressor 8a and the turbine 8b of the turbocharger 8 are indicated separately for descriptive convenience. The flow rates cited hereinafter are mass flow rates and therefore "g/sec" is used as the unit for them.

Referring to FIG 3, the flow rate between the portion of the exhaust passage 4 to which the high-pressure EGR passage 20 is connected to the portion of the exhaust passage 4 to which the low-pressure EGR passage 21 is connected is considered to be constant, and therefore a flow rate Gdpf of the gas passing through the exhaust-gas purification catalyst unit 11 (will be referred to as "passing gas" where necessary) is expressed as a function of the difference $\Delta$ between the pressure at the outlet of the exhaust-gas purification catalyst unit 11 and the pressure at the inlet of the exhaust-gas purification catalyst unit 11 as in the equation (1) indicated below. Adapted to acquire the flow rate Gdpf of the passing gas as described above, ECU (30) serves as "flow-rate obtaining means" in the embodiment.

$$Gdpf = F(\Delta p) \qquad (1)$$

Further, the passing-gas flow rate Gdpf can be expressed as the equation (2) using a flow rate Gc of-gas drawn into the respective cylinders 2 (intake gas), a fuel amount Q (g/sec) supplied to the respective cylinders 2 from the fuel injection valves 14 per unit time, and an EGR rate $R_H$ of the first EGR gas. Note that the EGR rate $R_H$ is calculated by dividing a first EGR-gas flow rate Ghp1 by the intake-gas flow rate Gc.

$$Gdpf = (Gc + Q) \times (1 - R_H) \qquad (2)$$

A total EGR rate $R_A$ is obtained by dividing the sum of the flow rate Ghpl of the first EGR gas and a flow rate Glpl of the second EGR gas by the intake-gas flow rate Gc, and an EGR rate $R_H$ of the first EGR gas is obtained by subtracting an EGR rate $R_L$ of the second EGR gas from the total EGR rate $R_A$. Therefore, the EGR rate $R_H$ of the first EGR gas can be expressed as the equation (3) using the intake-gas flow rate Gc, a flow rate Gafm of fresh air, and the flow rate Glpl of the second EGR gas.

$$R_H = R_A - R_L = \frac{Gc - Gafm - Glpl}{Gc} \qquad (3)$$

The equation (4) indicated below is obtained by assigning the equation (3) to the equation (2).

$$Gdpf = \frac{(Gc + Q) \times (Gafm + Glpl)}{Gc} \qquad (4)$$

Then, the equation (5) indicated below is obtained from the equation (4).

$$Glpl = \frac{Gdpf \times Gc}{(Gc + Q)} - Gafm \qquad (5)$$

Then, the equation (6) indicated below is obtained by assigning the equation (1) to the equation (5).

$$Glpl = \frac{F(\Delta p) \times Gc}{(Gc + Q)} - Gafm \qquad (6)$$

Referring to FIG 3, an oxygen concentration O2s detected by the oxygen concentration sensor 10 represents the oxygen concentration in the intake gas. Because the intake gas is a mixture of air and EGR gas, the oxygen concentration in the intake gas decreases as the flow rate of EGR gas recirculated to the intake passage 3 increases. Therefore, the oxygen concentration O2s can be expressed as the equation (7) using an oxygen concentration O2air in air, the total EGR rate $R_A$, and a surplus air rate $\lambda$.

$$O2s = O2air(1 - \frac{R_A}{\lambda}) \qquad (7)$$

Because the surplus air rate $\lambda$ in the equation (7) can be expressed using an equivalence ratio M specific to each fuel type, the flow rate Gafm of fresh air, and the fuel amount Q, the equation (7) can be modified into the equation (8) indicated below.

$$O2s = O2air\left\{ 1 - \frac{R_A}{\dfrac{M \times Gafm}{Q}} \right\} \qquad (8)$$

Further, the total EGR rate $R_A$ can be expressed as the equation (9) using the flow rate Ghpl of the first EGR gas, the flow rate Glp1 of the second EGR gas, the flow rate Gc of intake gas, or using the flow rate Gc of intake gas and the flow rate Gafm of fresh air.

$$R_A = R_H + R_L = \frac{Ghpl + Glpl}{Gc} = \frac{Gc - Gafm}{Gc} \qquad (9)$$

Then, the equation (10) indicated below is obtained by assigning the equation (9) to the equation (8).

$$O2s = O2air\left\{ \frac{\dfrac{GC - Gafm}{Gc}}{\dfrac{M \times Gafm}{Q}} \right\} \qquad (10)$$

Then, the equation (11) indicated below is obtained from the equation (10).

$$Gc = \frac{Gafm}{1 - \left(1 - \dfrac{O2s}{O2air}\right) \times \dfrac{M \times Gafm}{Q}} \qquad (11)$$

With regard to the equation (11), the flow rate Gafm of fresh air can be obtained from the signals output from the air-flow sensor 6. Further, because the fuel amount supplied to the respective cylinders 2 is set by the ECU 30, the fuel amount Q representing the amount of fuel supplied to the respective cylinders 2 per unit time can be obtained from the fuel amount set by the ECU 30. The equivalence ratio M is a constant specific to each fuel type. The oxygen ratio in air is also a constant. The oxygen concentration O2air in air is also a constant. The oxygen concentration O2s in the intake gas can be obtained from the signals output from the oxygen concentration sensor 10. Therefore, the flow rate Gc of intake gas can be calculated from the output signals of the oxygen concentration sensor 10 and the output signals of the air-flow sensor 6.

Then, the flow rate Glpl of the second EGR gas is calculated by assigning the calculated flow rate Gc of the intake gas and the pressure difference ΔP detected by the pressure-difference sensor 13 to the equation (6). Then, the flow rate Ghp1 of the first EGR gas is calculated by assigning the calculated flow rate Glpl of the second EGR gas and the flow rate Gc of the intake gas to the equation (12) indicated below. Adapted to calculate the flow rate Ghpl of the first EGR gas and the flow rate Glp1 of the second EGR gas as described above, the ECU 30 serves as "estimating means" of the embodiment.

$$Ghpl = Gc - Gafm - Glpl \qquad (12)$$

Hereinafter, the relation learning routine will be further described with reference to FIG 2. In step S14, the ECU 30 corrects the relation between the opening degree of the low-pressure EGR valve 24 and the flow rate of the second EGR gas based on the calculated flow rate Glpl of the second EGR gas and the opening degree of the low-pressure EGR valve 24 at the time of said estimation, after which the ECU 30 finishes the present cycle of the routine. That is, the controlling means may have EGR-gas-amount correcting means for correcting the relation between the opening degree of an EGR valve and the flow rate of EGR gas based on the EGR gas flow rate at the first EGR valve or the second EGR valve controlled by open-loop control, which has been estimated by the estimating means, and the opening degree of the EGR valve at the time of said estimation.

According to the above-described example embodiment of the invention, thus, the oxygen concentration sensor 10 is provided at the intake manifold 3a located downstream of the high-pressure EGR passage 20 in the intake passage 3, and the high-pressure EGR passage 20 is connected to the portion of the exhaust passage 4 upstream of the exhaust-gas purification catalyst unit 11 and the low-pressure EGR passage 21 is connected to the portion of the exhaust passage 4 downstream of the exhaust-gas purification catalyst unit 11. Therefore, the flow rate Ghpl of the first EGR gas and the flow rate Glpl of the second EGR gas can be calculated from the pressure difference ΔP across the exhaust-gas purification catalyst unit 11, the flow rate Gafm of fresh air, the oxygen concentration O2s in the intake gas, and the fuel amount Q supplied to the respective cylinders 2. Then, the relation between the opening degree of the low-pressure EGR valve 24 and the flow rate of the second EGR gas is corrected based on the calculated flow rate Glpl of the second EGR gas. As such, the accuracy of the open-loop control to the low-pressure EGR valve 24 improves.

The invention is not limited to the foregoing example embodiment, but it may be embodied in various other forms and structures. For example, the invention may be applied to, as well as diesel engines, various other internal combustion engines that run on other fuels including gasoline. Further, a particulate filter for trapping particulate matter in exhaust gas may be provided in the exhaust passage instead of the exhaust-gas purification catalyst unit.

While only the low-pressure EGR valve is controlled by open-loop control in the foregoing example embodiment, because the flow rate of the first EGR gas can be also estimated, the invention can be applied also to internal combustion engines in which the high-pressure EGR valve is controlled by open-loop control. Further, the invention can be applied also to internal combustion engines in which the high-pressure EGR valve and the low-pressure EGR valve are both controlled by open-loop control. Further, the method of using the calculated flow rate of each EGR gas is not limited to the correction of control of each EGR valve. For example, the temperature of the gas drawn into each cylinder may be estimated and the flow rate of EGR gas to be recirculated to the intake passage may be determined in consideration of the estimated gas temperature. That is, the controlling means may have EGR-gas-amount correcting means for estimating the temperature of gas drawn into the cylinders based on the flow rate of each EGR gas estimated by the estimating means and correcting the flow rate of EGR gas to be recirculated to the intake passage based on the estimated temperature. In this case, unnecessary recirculation of EGR gas can be minimized, and thus the exhaust emissions further decrease.

While the flow rate of gas passing through the exhaust-gas purification catalyst unit is obtained based on the pressure difference between the inlet and outlet of the exhaust-gas purification catalyst in the foregoing example embodiment of the invention, said flow rate may alternatively be determined using a function using the exhaust gas temperature instead of the pressure difference across the exhaust-gas purification catalyst. In this case, the flow rate of gas passing through the exhaust-gas purification catalyst unit can be estimated more accurately. Further, a flow-rate sensor may be provided in the exhaust passage to detect the flow rate of the gas passing through the exhaust-gas purification catalyst unit.

**Claims**

1. An exhaust-gas recirculation apparatus for an internal combustion engine (1), including: exhaust-gas purifying means (11) provided in an exhaust passage (4) of the internal combustion engine (1); a first EGR passage (20) extending from a portion of the exhaust passage (4) upstream of the exhaust-gas purifying means (11) to an intake passage (3) of the internal combustion engine (1); a second EGR passage (21) extending from a portion of the exhaust passage (4) downstream of the exhaust-gas purifying means (11) to a portion of the intake passage (3) upstream of a portion to which exhaust gas is delivered from the first EGR passage (20); a first EGR valve (22) that adjusts the flow rate of exhaust gas flowing in the first EGR passage (20); a second EGR valve (24) that adjusts the flow rate of exhaust gas flowing in the second EGR passage (21); and controlling means for controlling at least one of the first EGR valve (22) and the second EGR valve (24) by open-loop control,
the exhaust-gas recirculation apparatus further has: fresh-air amount detecting means (6) for detecting the flow rate of air drawn into the intake passage (3) of the internal combustion engine (1) from the outside; oxygen concentration detecting means (10) for detecting the oxygen concentration in gas at a portion of the intake passage (3) downstream of the portion to which exhaust gas is delivered from the first EGR passage (20); the exhaust-gas recirculation apparatus **characterized by** flow-rate obtaining means (30) for obtaining the flow rate of gas passing through the exhaust-gas purifying means (11), and in that
the controlling means (30) has estimating means (30) for estimating the flow rate of gas flowing in the first EGR passage (20) and the flow rate of gas flowing in the second EGR passage (21) based on the air flow rate detected by the fresh-air amount detecting means (6), the oxygen concentration detected by the oxygen concentration detecting means (10), the gas flow rate detected by the flow-rate obtaining means (30), and the amount of fuel supplied to cylinders of the internal combustion engine (1) per unit time.

2. The exhaust-gas recirculation apparatus according to claim 1, wherein the estimating means (30) first estimates the flow rate of intake gas drawn into the cylinders of the internal combustion engine (1) based on the air flow rate detected by the fresh-air amount detecting means (6), the oxygen concentration detected by the oxygen concentration detecting means (10), and the amount of fuel supplied to the cylinders of the internal combustion engine (1), then the estimating means (30) estimates the flow rate of gas flowing in the second EGR passage (21) based on the estimated intake gas flow rate, the gas flow rate obtained by the flow-rate obtaining means (30), the air flow rate detected by the fresh-air amount detecting means (6), and the amount of fuel supplied to the cylinders of the internal combustion engine (1), and then the estimating means (30) estimates the flow rate of gas flowing in the first EGR passage (20) based on the estimated flow rate of gas flowing in the second EGR passage (21), the flow rate of intake gas, and the air flow rate detected by the fresh-air amount detecting means (6).

3. The exhaust-gas recirculation apparatus according to claim 1 or 2, **characterized in that** it further comprises:

   pressure-difference detecting means (13) for detecting a difference between the pressure at an inlet of the exhaust-gas purifying means (11) and the pressure at an outlet of the exhaust-gas purifying means (11), wherein the flow-rate obtaining means (30) estimates the flow rate of gas passing through the exhaust-gas purifying means (11) based on the pressure difference detected by the pressure-difference detecting means (13).

4. The exhaust-gas recirculation apparatus according to any one of claims 1 to 3, **characterized in that**:

   the controlling means (30) has EGR-gas-amount correcting means for correcting a relation between the opening degree of one of the first EGR valve (22) and the second EGR valve (24) controlled by open-loop control and the EGR gas flow rate at the one of the first EGR valve (22) and the second EGR valve (24) based on an EGR gas flow rate at the one of the first EGR valve (22) and the second EGR valve (24) which has been estimated by the estimating means (30) and the opening degree of the one of the first EGR valve (22) and the second EGR valve (24) at the time of the estimation by the estimating means (30).

5. The exhaust-gas recirculation apparatus according to any one of claims 1 to 3, **characterized in that**:

   the controlling means (30) has EGR-gas-amount correcting means for estimating the temperature of gas drawn into the cylinders of the internal combustion engine based on the flow rates of the respective EGR gases estimated by the estimating means (30) and correcting the flow rate of the EGR gas to be recirculated to the intake passage (3) based on the estimated gas temperature.

6. An exhaust-gas recirculation flow rate estimation method for an exhaust-gas recirculation apparatus for an internal combustion engine (1), the exhaust-gas recirculation apparatus including: exhaust-gas purifying means (11) provided in an exhaust passage (4) of the internal combustion engine (1); a first EGR passage (20) extending from a portion of the exhaust passage (4) upstream of the exhaust-gas purifying means (11) to an intake passage (3) of the internal combustion engine (1); a second EGR passage (21) extending from a portion of the exhaust passage (4) downstream of the exhaust-gas purifying means (11) to a portion of the intake passage (3) upstream of a portion to which exhaust gas is delivered from the first EGR passage (20); a first EGR valve (22) that adjusts the flow rate of exhaust gas flowing in the first EGR passage (20); a second EGR valve (24) that adjusts the flow rate of exhaust gas flowing in the second EGR passage (21); and controlling means for controlling at least one of the first EGR valve (22) and the second EGR valve (24) by open-loop control, the exhaust-gas recirculation flow rate estimation method comprising :

detecting the flow rate of air drawn into the intake passage (3) of the internal combustion engine (1) from the outside; detecting the oxygen concentration in gas at a portion of the intake passage (3) downstream of the portion to which exhaust gas is delivered from the first EGR passage (20); being **characterized by** :

obtaining the flow rate of gas passing through the exhaust-gas purifying means (11); and

estimating the flow rate of gas flowing in the first EGR passage (20) and the flow rate of gas flowing in the second EGR passage (21) based on the detected flow rate of air drawn into the intake passage (3) of the internal combustion engine (1) from the outside, the detected oxygen concentration in the gas at the portion of the intake passage (3) downstream of the portion to which exhaust gas is delivered from the first EGR passage (20), the flow rate of gas passing through the exhaust-gas purifying means (11), and the amount of fuel supplied to cylinders of the internal combustion engine (1) per unit time.

7. The exhaust-gas recirculation flow rate estimation method according to claim 6, **characterized in that**
the flow rate of intake gas drawn into the cylinders of the internal combustion engine (1) is first estimated based on the detected air flow rate, the detected oxygen concentration, and the amount of fuel supplied to the cylinders of the internal combustion engine (1);
the flow rate of gas flowing in the second EGR passage (21) is then estimated based on the estimated intake gas flow rate, the obtained gas flow rate, the detected air flow rate, and the amount of fuel supplied to the cylinders of the internal combustion engine (1); and
the flow rate of gas flowing in the first EGR passage (20) is then estimated based on the estimated flow rate of gas flowing in the second EGR passage (21), the flow rate of intake gas, and the detected air flow rate.

8. The exhaust-gas recirculation flow rate estimation method according to claim 6 or 7, **characterized by**
detecting a difference between the pressure at an inlet of the exhaust-gas purifying means (11) and the pressure at an outlet of the exhaust-gas purifying means (11), wherein
the flow rate of gas passing through the exhaust-gas purifying means (11) is estimated based on the detected pressure difference.

9. The exhaust-gas recirculation flow rate estimation method according to any one of claims 6 to 8, **characterized by**
correcting a relation between the opening degree of one of the first EGR valve (22) and the second EGR valve (24) controlled by open-loop control and the EGR gas flow rate at the one of the first EGR valve (22) and the second EGR valve (24) based on an estimated EGR gas flow rate at the one of the first EGR valve (22) and the second EGR valve (24) and the opening degree of the one of the first EGR valve (22) and the second EGR valve (24) at the time of the estimation of the EGR gas flow rate.

10. The exhaust-gas recirculation flow rate estimation method according to any one of claims 6 to 8, **characterized by**
estimating the temperature of gas drawn into the cylinders of the internal combustion engine based on the estimated flow rates of the respective EGR gases and correcting the flow rate of the EGR gas to be recirculated to the intake passage (3) based on the estimated gas temperature.

**Patentansprüche**

1.  Abgasrückführungsvorrichtung für einen Verbrennungsmotor (1), umfassend:

    Abgasreinigungsmittel (11), die in einem Auslaßkanal (4) des Verbrennungsmotors (1) vorgesehen sind, einen ersten AGR-Kanal (20), der sich von einem Abschnitt des Auslaßkanals (4) stromaufwärts der Abgasreinigungsmittel (11) zu einem Ansaugkanal (3) des Verbrennungsmotors (1) erstreckt, einen zweiten AGR-Kanal (21), der sich von einem Abschnitt des Auslaßkanals (4) stromabwärts der Abgasreinigungsmittel (11) zu einem Abschnitt des Ansaugkanals (3) stromaufwärts eines Abschnitts, welchem Abgas aus dem ersten AGR-Kanal (20) zugeführt wird, erstreckt, ein erstes AGR-Ventil (22), welches die Durchflußrate des in dem ersten AGR- Kanal (20) strömenden Abgases einstellt, ein zweites AGR-Ventil (24), welches die Durchflußrate des in dem zweiten AGR-Kanal (21) strömenden Abgases einstellt, und Steuerungsmittel zum Steuern mindestens eines von dem ersten AGR-Ventil (22) und dem zweiten AGR-Ventil (24) durch rückführungslose Steuerung, wobei die Abgasrückführungsvorrichtung ferner aufweist: Frischluftmengen-Detektionsmittel (6) zum Detektieren der Durchflußrate der Luft, die von außen in den Ansaugkanal (3) des Verbrennungsmotors (1) angesaugt wird, Sauerstoffkonzentrations-Detektionsmittel (10) zum Detektieren der Sauerstoffkonzentration im Gas an einem Abschnitt des Ansaugkanals (3) stromabwärts des Abschnitts, welchem Abgas aus dem ersten AGR- Kanal (20) zugeführt wird, wobei die Abgasrückführungsvorrichtung **gekennzeichnet ist durch** Durchflußraten- Gewinnungsmittel (30) zum Gewinnen der Durchflußrate des Gases, das **durch** die Abgasreinigungsmittel (11) strömt, und **dadurch**, daß
    die Steuerungsmittel (30) Schätzmittel (30) zum Schätzen der Durchflußrate des in dem ersten AGR- Kanal (20) strömenden Gases und der Durchflußrate des in dem zweiten AGR-Kanal (21) strömenden Gases auf der Basis der Luftdurchflußrate, die von den Frischluftmengen-Detektionsmitteln (6) detektiert wird, der Sauerstoffkonzentration, die von den Sauerstoffkonzentrations-Detektionsmitteln (10) detektiert wird, der Gasdurchflußrate, die von den Durchflußraten-Gewinnungsmitteln (30) detektiert wird, und der Menge an Kraftstoff, die den Zylindern des Verbrennungsmotors (1) pro Zeiteinheit zugeführt wird, aufweist.

2.  Abgasrückführungsvorrichtung nach Anspruch 1, wobei
    die Schätzmittel (30) zuerst die Durchflußrate des Ansauggases, das in die Zylinder des Verbrennungsmotors (1) gesaugt wird, auf der Basis der Luftdurchflußrate, die von den Frischluftmengen-Detektionsmitteln (6) detektiert wird, der Sauerstoffkonzentration, die von den Sauerstoffkonzentrations-Detektionsmitteln (10) detektiert wird, und der Menge an Kraftstoff, die den Zylindern des Verbrennungsmotors (1) zugeführt wird, schätzen, danach die Schätzmittel (30) die Durchflußrate des in dem zweiten AGR-Kanal (21) strömenden Gases auf der Basis der geschätzten Ansauggas-Durchflußrate, der Gasdurchflußrate, die von den Durchflußraten-Gewinnungsmitteln (30) gewonnen wird, der Luftdurchflußrate, die von den Frischluftmengen-Detektionsmitteln (6) detektiert wird, und der Menge an Kraftstoff, die den Zylindern des Verbrennungsmotors (1) zugeführt wird, schätzen, und danach die Schätzmittel (30) die Durchflußrate des in dem ersten AGR-Kanal (20) strömenden Gases auf der Basis der geschätzten Durchflußrate des in dem zweiten AGR-Kanal (21) strömenden Gases, der Durchflußrate des Ansauggases und der Luftdurchflußrate, die von den Frischluftmengen-Detektionsmittein (6) detektiert wird, schätzen.

3.  Abgasrückführungsvorrichtung nach Anspruch 1 oder 2, **dadurch gekennzeichnet, daß** sie ferner umfaßt:

    Druckdifferenz-Detektionsmittel (13) zum Detektieren einer Differenz zwischen dem Druck an einem Einlaß der Abgasreinigungsmittel (11) und dem Druck an einem Auslaß der Abgasreinigungsmittel (11), wobei
    die Durchflußraten-Gewinnungsmittel (30) die Durchflußrate des durch die Abgasreinigungsmittel (11) strömenden Gases auf der Basis der Druckdifferenz schätzen, die von den Druckdifferenz-Detektionsmitteln (13) detektiert wird.

4.  Abgasrückführungsvorrichtung nach einem der Ansprüche 1 bis 3, **dadurch gekennzeichnet, daß**:

    die Steuerungsmittel (30) AGR-Gasmengen-Korrekturmittel zum Korrigieren einer Beziehung zwischen dem Öffnungsgrad eines von dem ersten AGR-Ventil (22) und dem zweiten AGR-Ventil (24), die durch rückführungslose Steuerung gesteuert werden, und der AGR-Gas-Durchflußrate an dem einen von dem ersten AGR-Ventil (22) und dem zweiten AGR-Ventil (24) auf der Basis einer AGR-Gas-Durchflußrate an dem einen von dem ersten AGR-Ventil (22) und dem zweiten AGR-Ventil (24), welche durch die Schätzmittel (30) geschätzt wurde, und des Öffnungsgrades des einen von dem ersten AGR-Ventil (22) und dem zweiten AGR-Ventil (24) zum Zeitpunkt der Schätzung durch die Schätzmittel (30) aufweisen.

**5.** Abgasrückführungsvorrichtung nach einem der Ansprüche 1 bis 3, **dadurch gekennzeichnet, daß**:

die Steuerungsmittel (30) AGR-Gasmengen-Korrekturmittel zum Schätzen der Temperatur des Gases, das in die Zylinder des Verbrennungsmotors gesaugt wird, auf der Basis der Durchflußraten der jeweiligen AGR-Gase, die durch die Schätzmittel (30) geschätzt werden, und zum Korrigieren der Durchflußrate des AGR-Gases, das zu dem Ansaugkanal (3) zurückzuführen ist, auf der Basis der geschätzten Gastemperatur aufweisen.

**6.** Verfahren zur Schätzung der Abgasrückführungs-Durchflußrate für eine Abgasrückführungsvorrichtung für einen Verbrennungsmotor (1), wobei die Abgasrückführungsvorrichtung aufweist: Abgasreinigungsmittel (11), die in einem Auslaßkanal (4) des Verbrennungsmotors (1) vorgesehen sind, einen ersten AGR-Kanal (20), der sich von einem Abschnitt des Auslaßkanals (4) stromaufwärts der Abgasreinigungsmittel (11) zu einem Ansaugkanal (3) des Verbrennungsmotors (1) erstreckt, einen zweiten AGR-Kanal (21), der sich von einem Abschnitt des Auslaßkanals (4) stromabwärts der Abgasreinigungsmittel (11) zu einem Abschnitt des Ansaugkanals (3) stromaufwärts eines Abschnitts, welchem Abgas aus dem ersten AGR-Kanal (20) zugeführt wird, erstreckt, ein erstes AGR-Ventil (22), welches die Durchflußrate des in dem ersten AGR-Kanal (20) strömenden Abgases einstellt, ein zweites AGR-Ventil (24), welches die Durchflußrate des in dem zweiten AGR-Kanal (21) strömenden Abgases einstellt, und Steuerungsmittel zum Steuern mindestens eines von dem ersten AGR-Ventil (22) und dem zweiten AGR-Ventil (24) durch rückführungslose Steuerung, wobei das Verfahren zur Schätzung einer Abgasrückführungs-Durchflußrate umfaßt:

Detektieren der Durchflußrate der Luft, die von außen in den Ansaugkanal (3) des Verbrennungsmotors (1) angesaugt wird,
Detektieren der Sauerstoffkonzentration im Gas an einem Abschnitt des Ansaugkanals (3) stromabwärts des Abschnitts, welchem Abgas aus dem ersten AGR-Kanal (20) zugeführt wird, **gekennzeichnet durch**:

Gewinnen der Durchflußrate des Gases, das **durch** die Abgasreinigungsmittel (11) strömt, und
Schätzen der Durchflußrate des in dem ersten AGR-Kanal (20) strömenden Gases und der Durchflußrate des in dem zweiten AGR-Kanal (21) strömenden Gases auf der Basis der detektierten Durchflußrate der Luft, die von außen in den Ansaugkanal (3) des Verbrennungsmotors (1) angesaugt wird, der detektierten Sauerstoffkonzentration im Gas an dem Abschnitt des Ansaugkanals (3) stromabwärts des Abschnitts, welchem Abgas aus dem ersten AGR-Kanal (20) zugeführt wird, der Durchflußrate des Gases, das **durch** die Abgasreinigungsmittel (11) strömt, und der Menge an Kraftstoff, die den Zylindern des Verbrennungsmotors (1) pro Zeiteinheit zugeführt wird.

**7.** Verfahren zur Schätzung der Abgasrückführungs-Durchflußrate nach Anspruch 6, **dadurch gekennzeichnet, daß**
die Durchflußrate des Ansauggases, das in die Zylinder des Verbrennungsmotors (1) gesaugt wird, zuerst auf der Basis der detektierten Luftdurchflußrate, der detektierten Sauerstoffkonzentration und der Menge an Kraftstoff, die den Zylindern des Verbrennungsmotors (1) zugeführt wird, geschätzt wird,
die Durchflußrate des in dem zweiten AGR-Kanal (21) strömenden Gases danach auf der Basis der geschätzten Ansauggas-Durchflußrate, der gewonnenen Gasdurchflußrate, der detektierten Luftdurchflußrate und der Menge an Kraftstoff, die den Zylindern des Verbrennungsmotors (1) zugeführt wird, geschätzt wird, und
die Durchflußrate des in dem ersten AGR-Kanal (20) strömenden Gases danach auf der Basis der geschätzten Durchflußrate des in dem zweiten AGR-Kanal (21) strömenden Gases, der Durchflußrate des Ansauggases und der detektierten Luftdurchflußrate geschätzt wird.

**8.** Verfahren zur Schätzung der Abgasrückführungs-Durchflußrate nach Anspruch 6 oder 7, **gekennzeichnet durch**
Detektieren einer Differenz zwischen dem Druck an einem Einlaß der Abgasreinigungsmittel (11) und dem Druck an einem Auslaß der Abgasreinigungsmittel (11), wobei
die Durchflußrate des **durch** die Abgasreinigungsmittel (11) strömenden Gases auf der Basis der detektierten Druckdifferenz geschätzt wird.

**9.** Verfahren zur Schätzung der Abgasrückführungs-Durchflußrate nach einem der Ansprüche 6 bis 8, **gekennzeichnet durch**
Korrigieren einer Beziehung zwischen dem Öffnungsgrad eines von dem ersten AGR-Ventil (22) und dem zweiten AGR-Ventil (24), die **durch** rückführungslose Steuerung gesteuert werden, und der AGR-Gas-Durchflußrate an dem einen von dem ersten AGR-Ventil (22) und dem zweiten AGR-Ventil (24) auf der Basis einer geschätzten AGR-Gas-Durchflußrate an dem einen von dem ersten AGR-Ventil (22) und dem zweiten AGR-Ventil (24) und des Öffnungsgrades des einen von dem ersten AGR-Ventil (22) und dem zweiten AGR-Ventil (24) zum Zeitpunkt der Schätzung der AG R-Gas-Durchflußrate.

**10.** Verfahren zur Schätzung der Abgasrückführungs-Durchflußrate nach einem der Ansprüche 6 bis 8, **gekennzeichnet durch**

Schätzen der Temperatur des Gases, das in die Zylinder des Verbrennungsmotors gesaugt wird, auf der Basis der geschätzten Durchflußraten der jeweiligen AGR-Gase, und Korrigieren der Durchflußrate des AGR-Gases, das zu dem Ansaugkanal (3) zurückzuführen ist, auf der Basis der geschätzten Gastemperatur.

**Revendications**

**1.** Appareil de recyclage de gaz d'échappement pour un moteur à combustion interne (1), comprenant : des moyens de purification de gaz d'échappement (11) prévus dans un passage d'échappement (4) du moteur à combustion interne (1) ; un premier passage de recyclage de gaz d'échappement (20) s'étendant depuis une partie du passage d'échappement (4) en amont des moyens de purification de gaz d'échappement (11) jusqu'à un passage d'admission (3) du moteur à combustion interne (1) un deuxième passage de recyclage de gaz d'échappement (21) s'étendant depuis une partie du passage d'échappement (4) en aval des moyens de purification de gaz d'échappement (11) jusqu'à une partie du passage d'admission (3) en amont d'une partie à laquelle le gaz d'échappement est délivré à partir du premier passage de recyclage de gaz d'échappement (20) ; une première soupape de recyclage de gaz d'échappement (22) qui ajuste le débit de gaz d'échappement s'écoulant dans le premier passage de recyclage de gaz d'échappement (20) ; une deuxième soupape de recyclage de gaz d'échappement (24) qui ajuste le débit de gaz d'échappement s'écoulant dans le deuxième passage de recyclage de gaz d'échappement (21) ; et des moyens de commande destinés à commander au moins une de la première soupape de recyclage de gaz d'échappement (22) et de la deuxième soupape de recyclage de gaz d'échappement (24) grâce à une commande en boucle ouverte, l'appareil de recyclage de gaz d'échappement a en outre : des moyens de détection de quantité d'air frais (6) destinés à détecter le débit d'air aspiré dans le passage d'admission (3) du moteur à combustion interne (1) depuis l'extérieur ; des moyens de détection de concentration en oxygène (10) destinés à détecter la concentration en oxygène dans le gaz au niveau d'une partie du passage d'admission (3) en aval de la partie à laquelle le gaz d'échappement est délivré à partir du premier passage de recyclage de gaz d'échappement (20) ; l'appareil de recyclage de gaz d'échappement étant **caractérisé par** des moyens d'obtention de débit (30) destinés à obtenir le débit de gaz passant par les moyens de purification de gaz d'échappement (11), et en ce que les moyens de commande (30) ont des moyens d'estimation (30) destinés à estimer le débit de gaz s'écoulant dans le premier passage de recyclage de gaz d'échappement (20) et le débit de gaz s'écoulant dans le deuxième passage de recyclage de gaz d'échappement (21) sur la base du débit d'air détecté par les moyens de détection de quantité d'air frais (6), la concentration en oxygène détectée par les moyens de détection de concentration en oxygène (10), le débit de gaz détecté par les moyens d'obtention de débit (30), et la quantité de carburant délivrée aux cylindres du moteur à combustion interne (1) par unité de temps.

**2.** Appareil de recyclage de gaz d'échappement selon la revendication 1, dans lequel les moyens d'estimation (30) estiment tout d'abord le débit de gaz d'admission aspiré dans les cylindres du moteur à combustion interne (1) sur la base du débit d'air détecté par les moyens de détection de quantité d'air frais (6), la concentration en oxygène détectée par les moyens de détection de concentration en oxygène (10), et la quantité de carburant délivrée aux cylindres du moteur à combustion interne (1), les moyens d'estimation (30) estiment ensuite le débit de gaz s'écoulant dans le deuxième passage de recyclage de gaz d'échappement (21) sur la base du débit de gaz d'admission estimé, du débit de gaz obtenu par les moyens d'obtention de débit (30), du débit d'air détecté par les moyens de détection de quantité d'air frais (6), et de la quantité de carburant délivrée aux cylindres du moteur à combustion interne (1), et les moyens d'estimation (30) estiment alors le débit de gaz s'écoulant dans le premier passage de recyclage de gaz d'échappement (20) sur la base du débit estimé de gaz s'écoulant dans le deuxième passage de recyclage de gaz d'échappement (21), du débit de gaz d'admission, et du débit d'air détecté par les moyens de détection de quantité d'air frais (6).

**3.** Appareil de recyclage de gaz d'échappement selon la revendication 1 ou 2, **caractérisé en ce qu'**il comporte en outré :

des moyens de détection de différence de pression (13) destinés à détecter une différence entre la pression au niveau d'une entrée des moyens de purification de gaz d'échappement (11) et la pression au niveau d'une sortie des moyens de purification de gaz d'échappement (11), les moyens d'obtention de débit (30) estimant le débit de gaz passant par les moyens de purification de gaz d'échappement (11) sur la base de la différence de pression détectée par les moyens de détection de différence de pression (13).

**4.** Appareil de recyclage de gaz d'échappement selon l'une quelconque des revendications 1 à 3, **caractérisé en ce que** :

les moyens de commande (30) ont des moyens de correction de quantité de gaz de recyclage de gaz d'échappement destinés à corriger une relation entre le degré d'ouverture d'une de la première soupape de recyclage de gaz d'échappement (22) et de la deuxième soupape de recyclage de gaz d'échappement (24) commandée par la commande en boucle ouverte et le débit de gaz de recyclage de gaz d'échappement au niveau de l'une de la première soupape de recyclage de gaz d'échappement (22) et de la deuxième soupape de recyclage de gaz d'échappement (24) sur la base d'un débit de gaz de recyclage de gaz d'échappement au niveau de l'une de la première soupape de recyclage de gaz d'échappement (22) et de la deuxième soupape de recyclage de gaz d'échappement (24) qui a été estimé par les moyens d'estimation (30) et le degré d'ouverture de l'une de la première soupape de recyclage de gaz d'échappement (22) et de la deuxième soupape de recyclage de gaz d'échappement (24) au moment de l'estimation par les moyens d'estimation (30).

**5.** Appareil de recyclage de gaz d'échappement selon l'une quelconque des revendications 1 à 3, **caractérisé en ce que** :

les moyens de commande (30) ont des moyens de correction de quantité de gaz de recyclage de gaz d'échappement destinés à estimer la température du gaz aspiré dans les cylindres du moteur à combustion interne sur la base des débits des gaz de recyclage de gaz d'échappement respectifs estimés par les moyens d'estimation (30) et à corriger le débit du gaz de recyclage de gaz d'échappement devant être recyclé dans le passage d'admission (3) sur la base de la température de gaz estimée.

**6.** Procédé d'estimation de débit de recyclage de gaz d'échappement pour un appareil de recyclage de gaz d'échappement pour un moteur à combustion interne (1), l'appareil de recyclage de gaz d'échappement comprenant :

des moyens de purification de gaz d'échappement (11) prévus dans un passage d'échappement (4) du moteur à combustion interne (1) ; un premier passage de recyclage de gaz d'échappement (20) s'étendant depuis une partie du passage d'échappement (4) en amont des moyens de purification de gaz d'échappement (11) jusqu'à un passage d'admission (3) du moteur à combustion interne (1) ; un deuxième passage de recyclage de gaz d'échappement (21) s'étendant depuis une partie du passage d'échappement (4) en aval des moyens de purification de gaz d'échappement (11) jusqu'à une partie du passage d'admission (3) en amont d'une partie à laquelle le gaz d'échappement est délivré à partir du premier passage de recyclage de gaz d'échappement (20) ; une première soupape de recyclage de gaz d'échappement (22) qui ajuste le débit de gaz d'échappement s'écoulant dans le premier passage de recyclage de gaz d'échappement (20) ; une deuxième soupape de recyclage de gaz d'échappement (24) qui ajuste le débit de gaz d'échappement s'écoulant dans le deuxième passage de recyclage de gaz d'échappement (21) ;
et des moyens de commande destinés à commander au moins une de la première soupape de recyclage de gaz d'échappement (22) et de la deuxième soupape de recyclage de gaz d'échappement (24) grâce à une commande en boucle ouverte, le procédé d'estimation de débit de recyclage de gaz d'échappement comportant le fait de :

détecter le débit d'air aspiré dans le passage d'admission (3) du moteur à combustion interne (1) depuis l'extérieur ;
détecter la concentration en oxygène dans le gaz au niveau d'une partie du passage d'admission (3) en aval de la partie à laquelle le gaz d'échappement est délivré à partir du premier passage de recyclage de gaz d'échappement (20) ; **caractérisé par** le fait de :

obtenir le débit de gaz passant par les moyens de purification de gaz d'échappement (11) ; et
estimer le débit de gaz s'écoulant dans le premier passage de recyclage de gaz d'échappement (20) et le débit de gaz s'écoulant dans le deuxième passage de recyclage de gaz d'échappement (21) sur la base du débit détecté d'air aspiré dans le passage d'admission (3) du moteur à combustion interne (1) depuis l'extérieur, la concentration en oxygène détectée dans le gaz au niveau de la partie du passage d'admission (3) en aval de la partie à laquelle du gaz d'échappement est délivré depuis le premier passage de recyclage de gaz d'échappement (20), le débit de gaz passant par les moyens de purification de gaz d'échappement (11), et la quantité de carburant délivrée aux cylindres du moteur à combustion interne (1) par unité de temps.

14

**7.** Procédé d'estimation de débit de recyclage de gaz d'échappement selon la revendication 6, **caractérisé en ce que** le débit de gaz d'admission aspiré dans les cylindres du moteur à combustion interne (1) est tout d'abord estimé sur la base du débit d'air détecté, la concentration en oxygène détectée, et la quantité de carburant délivrée aux cylindres du moteur à combustion interne (1),

le débit de gaz s'écoulant dans le deuxième passage de recyclage de gaz d'échappement (21) est alors estimé sur la base du débit de gaz d'admission estimé, du débit de gaz obtenu, du débit d'air détecté, et de la quantité de carburant délivrée aux cylindres du moteur à combustion interne (1) ; et

le débit de gaz s'écoulant dans le premier passage de recyclage de gaz d'échappement (20) est ensuite estimé sur la base du débit de gaz estimé s'écoulant dans le deuxième passage de recyclage de gaz d'échappement (21), du débit de gaz d'admission, et du débit d'air détecté.

**8.** Procédé d'estimation de débit de recyclage de gaz d'échappement selon la revendication 6 ou 7, **caractérisé par** le fait de

détecter une différence entre la pression au niveau d'une entrée des moyens de purification de gaz d'échappement (11) et la pression au niveau d'une sortie des moyens de purification de gaz d'échappement (11),

le débit de gaz passant par les moyens de purification de gaz d'échappement (11) étant estimé sur la base de la différence de pression détectée.

**9.** Procédé d'estimation de débit de recyclage de gaz d'échappement selon l'une quelconque des revendications 6 à 8, **caractérisé par** le fait de

corriger une relation entre le degré d'ouverture d'une de la première soupape de recyclage de gaz d'échappement (22) et de la deuxième soupape de recyclage de gaz d'échappement (24) commandée par la commande en boucle ouverte et le débit de gaz de recyclage de gaz d'échappement au niveau de l'une de la première soupape de recyclage de gaz d'échappement (22) et de la deuxième soupape de recyclage de gaz d'échappement (24) sur la base d'un débit de gaz de recyclage de gaz d'échappement estimé au niveau de l'une de la première soupape de recyclage de gaz d'échappement (22) et de la deuxième soupape de recyclage de gaz d'échappement (24) et le degré d'ouverture de l'une de la première soupape de recyclage de gaz d'échappement (22) et de la deuxième soupape de recyclage de gaz d'échappement (24) au moment de l'estimation du débit de gaz de recyclage de gaz d'échappement.

**10.** Procédé d'estimation de débit de recyclage de gaz d'échappement selon l'une quelconque des revendications 6 à 8, **caractérisé par** le fait de

estimer la température du gaz aspiré dans les cylindres du moteur à combustion interne sur la base des débits estimés des gaz de recyclage de gaz d'échappement respectifs et corriger le débit du gaz de recyclage de gaz d'échappement devant être recyclé dans le passage d'admission (3) sur la base de la température de gaz estimée.

# FIG.1

EP 2 198 141 B1

# F I G . 2

```
   ┌─────────────────────────┐
   │   RELATION LEARNING     │
   │       ROUTINE           │
   └─────────────────────────┘
                │
                ▼
   ┌─────────────────────────┐
   │   DETERMINE ENGINE      │ ~S11
   │   OPERATION STATE       │
   └─────────────────────────┘
                │
                │        S12
                ▼
           ╱─────────╲
          ╱  LEARNING  ╲      NO
         ╱ CONDITION IS  ╲──────────┐
          ╲  IN EFFECT   ╱          │
           ╲     ?     ╱            │
            ╲─────────╱             │
                │ YES               │
                ▼                   │
   ┌─────────────────────────┐      │
   │   ESTIMATE FLOW RATES   │ ~S13 │
   │ OF FIRST AND SECOND     │      │
   │      EGR GASES          │      │
   └─────────────────────────┘      │
                │                   │
                ▼                   │
   ┌─────────────────────────┐      │
   │   CORRECT RELATION      │      │
   │   BETWEEN OPENING       │      │
   │ DEGREE OF LOW-PRESSURE  │ ~S14 │
   │   EGR VALVE AND FLOW    │      │
   │ RATE OF SECOND EGR GAS  │      │
   └─────────────────────────┘      │
                │                   │
                ▼◄──────────────────┘
                │
                ▼
           ┌─────────┐
           │   END   │
           └─────────┘
```

FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005076456 A
- JP 10141147 A
- JP 6021550 A
- JP 6021550 B